# EUROPEAN PATENT APPLICATION

(11) **EP 0 899 002 A2**
(43) Date of publication of application: **03.03.1999**
(21) Application number: 98202552.0
(22) Date of filing: 30.07.1998
(51) Int. Cl.: B01D 53/94

(54) **Promoted three-way catalyst and process for lean NOx reduction**

(30) Priority: 26.08.1997 US 999793
(71) Applicant: GENERAL MOTORS CORPORATION, Detroit Michigan 48202 (US)
(72) Inventor: Cho, Byong Kwon, Rochester Hills, Michigan (US)
(74) Representative: Denton, Michael John

(57) **Abstract**

A lean NO_{X} catalyst containing an intimate mixture of an alkali metal ion exchanged ZSM-5 zeolite and cerium containing, alumina supported noble metal three-way catalyst is particularly effective when the oxygen-rich exhaust is cycled between two parallel catalyst-containing converters alternating with an injection of a hydrocarbon into the converters in an amount of about three to six times the hydrocarbon content of the lean exhaust stream.

## Description

### TECHNICAL FIELD

This invention relates to the treatment of exhaust gases from an automobile diesel or gasoline engine operated under fuel-lean conditions. More specifically, this invention relates to a zeolite promoted, three-way noble metal catalyst and a method of utilizing such catalyst for the effective reduction of NOₓ in the exhaust from a lean operating internal combustion engine.

### BACKGROUND OF THE INVENTION

Diesel engines and lean burn gasoline engines use much more air than the stoichiometric amount for burning the fuel injected into the combustion chamber. Such engines usually operate at air-to-fuel ratios greater than 17 -- typically about 20 to 23 for the lean burn gasoline engine and 35 to 40 for the diesel engine. Under such operating conditions, the fuel is efficiently consumed and the content of unburned hydrocarbons and carbon monoxide in the exhaust is greatly reduced. However, the formation of nitrogen oxide(s) (NOₓ, e.g N₂O, NO and NO₂) remains to be a serious problem.

It has been well established that three-way catalysts (used with gasoline engines operated at stoichiometric air/fuel ratios) containing noble metals such as Pt, Pd and Rh supported on γ-alumina have little activity toward NO reduction under highly lean conditions because their reduction activity is severely suppressed in the presence of excess oxygen. Thus, the three-way catalysts have not been considered promising as a lean-NOₓ reduction catalyst. Recently, platinum-ion exchanged zeolite catalysts, such as Pt-ZSM-5, have been shown to be active for NOₓ reduction by hydrocarbons at low temperatures (about 200°C) under lean conditions, typical of diesel engine exhaust conditions. However, this catalyst suffers from three major shortcomings, namely:
1. narrow temperature window for its activity,
2. tendency to form a large amount of nitrous oxide,
3. poor hydrothermal durability of ZSM-5 zeolite substrate.

First, the catalytic activity of Pt-ZSM-5 is significant only in a very narrow temperature range around the reaction lightoff temperature of hydrocarbon oxidation, which is about 200°C. In fact, all the known lean-NOₓ catalysts reported in the literature lose their catalytic activity for lean-NOₓ reduction when the catalyst temperature reaches well above (e.g., 350°C to 500°C) the lightoff temperature of hydrocarbon oxidation. This narrow temperature window of the lean-NOₓ catalysts is considered to be one of the major technical obstacles because it requires precise temperature control of the catalyst to maintain a significant level of the catalytic activity.

Second, the Pt-ZSM-5 catalyst produces a large amount of nitrous oxide during lean-NOₓ reduction process. Obviously, this is an undesirable situation since nitrous oxide is one of the trace gases that contribute to greenhouse warming as well as stratospheric ozone depletion.

Third, the ZSM-5 zeolite substrate has been known to exhibit poor hydrothermal stability due to dealumination under humid and high temperature conditions. However, hydrocarbon-fueled engine exhaust contains water at high temperature.

The present invention alleviates the shortcomings of the prior art as listed above, while significantly improving the activity of the three-way catalysts for lean-NOₓ reduction through modifications in both catalyst formulation and reactor operating modes.

### SUMMARY OF THE INVENTION

This invention includes both a new catalyst formulation and an operating strategy of the new catalyst used for reduction of NOₓ from highly lean exhaust conditions such as from diesel or lean-burn gasoline engines. The new catalyst formulation includes incorporation of ZSM-5 zeolite in the three-way catalyst matrix which contains both noble metals (such as Pt, Pd and Rh) and base metals such as Ce. The zeolite has a large silica/alumina ratio, at least 50:1 and preferably at least 200:1, and is preferably Na-ion exchanged before being incorporated in the three-way catalyst matrix. An intimate, compacted particulate mixture of alumina-supported, two or three noble metal plus cerium particles and alkali metal-exchanged ZSM-5 zeolite particles is used in a suitable converter container to treat the exhaust.

The operating strategy of the new catalyst includes cyclic operation modes of the catalytic converter consisting of a lean exhaust half-cycle followed by a hydrocarbon-rich half-cycle. The lean-to-rich transient conditions are created by periodically introducing hydrocarbon pulses to the catalytic converter from a source which may be different than, or the same as, the engine fuel supply. Though the intermittent addition of hydrocarbons in periodic pulses in a separate stream is preferable, the hydrocarbon concentration entering the converter can be raised either by adding hydrocarbons continuously to the exhaust at a constant rate or by tuning the engine control parameters in such a way that the engine exhaust gas periodically contains high concentrations of hydrocarbons.

In a preferred embodiment, two exhaust treatment reactors or converters utilizing the subject ZSM-5 zeolite promoted three-way catalyst are used in parallel. The NOₓ-containing lean exhaust gas at 200°C to 500°C is fed first to one reactor and then the other for suitable periods of, for example, about 20 seconds. When the exhaust is being fed to one reactor, a small amount of hydrocarbon, for example, about three to six times the hydrocarbon mass in the exhaust entering the reactor during the previous cycle, is injected into the then-unused converter. Such process is reversed every 20-second period or other period determined to be suitable. Such cyclical treatment of the hot catalyst with hydrocarbon greatly increased the conversion efficiency of the catalyst for NOₓ to N₂ reduction.

Other objects and advantages of the invention will become more apparent from a detailed description of the invention which follows. Reference will be had to the drawings.

### BRIEF DESCRIPTION OF THE DRAWINGS

Figure 1 is a graph of the NO conversion (%) of a commercial three-way catalyst versus exhaust temperature (°C) during a STD mode, ●; a SHA mode, ○; and a CHA mode, ▲, with a cycling frequency of 0.025 Hz.
Figure 2 is a graph of the NO conversion (%) of a ZSM-5 zeolite promoted three-way catalyst versus exhaust temperature (°C) during a STD mode, ○, and a CHA mode, ●, with a cycling frequency of 0.025 Hz.
Figure 3 is a graph of conversion (%) versus cycling frequency for a ZSM-5 zeolite promoted three-way catalyst (△ = C₂H₄ conversion, ▲ = NO conversion, T = 300°C).
Figure 4 is a graph of NO conversion (%) versus exhaust gas temperature (°C) for the CHA exhaust treatment mode of a commercial three-way catalyst and a ZSM-5 zeolite promoted three-way catalyst (○ = three way catalyst, ● = promoted three-way catalyst, and cycling frequency = 0.025 Hz).

### DESCRIPTION OF THE PREFERRED EMBODIMENT

This disclosure of lean-NOₓ catalysis includes three discoveries of practical importance. The first is that cerium (preferably, or other suitable additives listed below) in three-way catalysts can promote both the storage and decomposition of NOₓ under lean conditions. The second is that ZSM-5 zeolite with a very large value of the Si/Al ratio can also store NOₓ under lean conditions and is stable in the water-containing exhaust. Third, the stored NOₓ under lean conditions can easily be reduced to nitrogen under rich conditions without forming the undesirable nitrous oxide (N₂O). These three discoveries are the key concepts employed in this invention to improve the overall performance of the three-way catalysts for lean-NOₓ reduction. This invention is also concerned with an operating strategy of the promoted three-way catalyst, by which the lean-NOₓ reduction activity of the catalyst can be improved, while the temperature window of the lean-NOₓ activity is widened. More specifically, it has been discovered that the activity of the promoted three-way catalyst can best be utilized by an appropriate cyclic operation of the catalyst, and that there exists an optimum cycling frequency for the maximum activity of the catalyst at a given experimental condition.

### Development of Promoted Three-Way Catalyst

The promoted three-way (TWP) catalyst was made from commercial three-way (TW) catalysts by incorporating a suitable ZSM-5 zeolite into the TW catalyst matrix as follows. The commercial TW catalyst was obtained from Delphi Energy and Engine Management Division of General Motors Corporation. The catalyst contained Pt, Rh and Ce supported on alumina. The ZSM-5 powder in the size range of 2-3 µm was obtained from Zeochem Corporation. The ZSM-5 used had a high Si/Al ratio of 200. It was ion exchanged to contain sodium ions as the cation species of the material. A physical mixture of the TW catalyst with the sodium ion exchanged ZSM-5 zeolite in the mass ratio of 1-to-1 was obtained by grinding and milling of the fine powders of both material. The uniform physical mixture was compressed into a disk at 15 ton pressure, followed by heat treatment at 600°C for 20 h in air. Cooled to room temperature, the catalyst disk was crushed, ground and screened for 70-80 mesh sizes before being used in the reactor experiments. The catalyst was calcined in flowing air for 4 h at 500°C. Details of chemical composition of these catalysts are shown in Table 1.

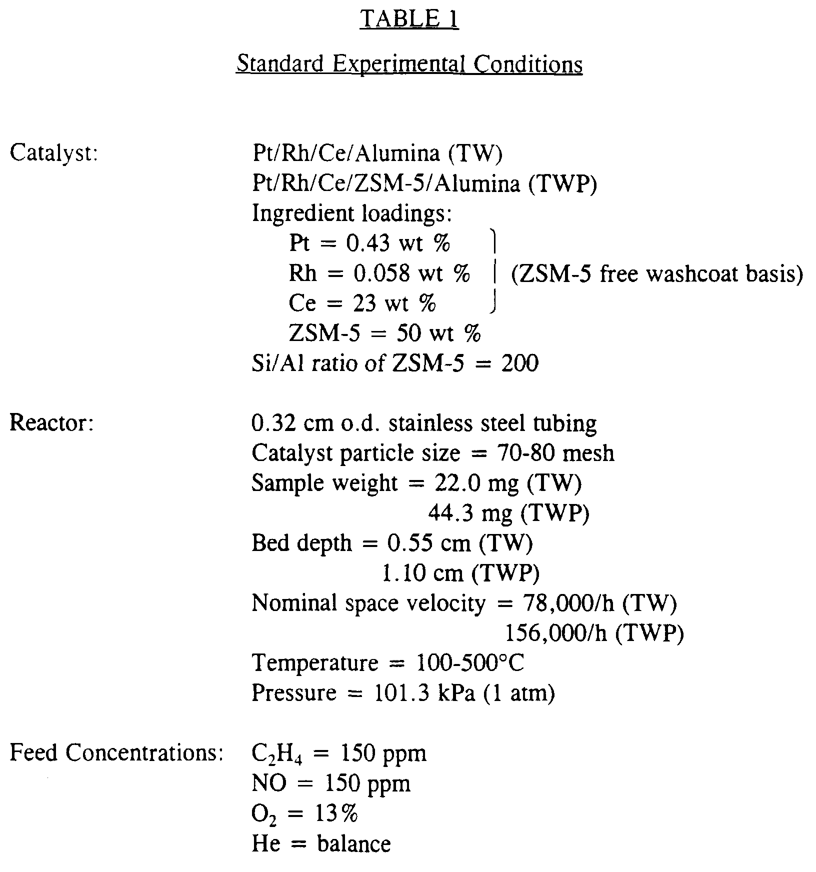

Morphology of the TWP catalyst examined by TEM and SEM revealed that typical TWP catalyst particles are made of three parts: macro-particle (30 to 100 µm) in the core, micro-particles (2 to 5 µm) surrounding the macro-particle, and a layer of dusty submicro-particles (≈ 0.2 µm) covering the micro-particle. Elemental analysis by SEM revealed that the macro- and micro-particles consist mostly of the TW catalyst and sodium-exchanged ZSM-5, respectively, while the submicro-particles are a mixture of the TW catalyst and sodium-exchanged ZSM-5 particles.

### Experimental Demonstration of the Superior Performance of the Promoted Three-Way Catalyst

The superior performance of the TWP catalyst was demonstrated experimentally by carrying out a series of reactor experiments using both the TW and TWP catalysts. The reactor was made of a 0.32-cm o.d. stainless steel tube packed with the catalyst powder, either the TW or TWP catalyst. The amount of the catalyst sample for the reactor experiments was adjusted in such a way that the amount of Pt, Rh and Ce in the reactor remains constant for both catalyst samples throughout the reactor experiments. Before each experimental run for activity measurement, the catalyst was pretreated with a standard synthetic lean exhaust feedstream (containing 150 ppm NO, 150 ppm ethylene and 13% oxygen in He) for 2 h at 500°C. This feed composition simulates the exhaust composition from a light-duty DI (direct injection) diesel engine. Both steady-state and transient responses of the gas-phase concentration in the exit stream from the reactor were monitored as a function of time by a mass spectrometer.

In the reactor experiments, three different modes of the reactor operating conditions were compared: standard exhaust flow over the catalyst mode without hydrocarbon (HC) addition (STD mode), steady HC (ethylene) addition mode (SHA mode), and cyclic HC addition mode (CHA mode). The difference among these three operating modes is in the feed concentration of ethylene with all other experimental conditions kept constant, as shown in Table 2.

**TABLE 2**

| Reactor Operating Mode | NO | Ethylene | Oxygen |
|---|---|---|---|
| Standard (STD) | 150 ppm | 150 ppm | 13% |
| Steady HC Addition (SHA) | 150 | 500 | 13 |
| Cyclic HC Addition (CHA) | 150 | 150-850 | 13 |

Ethylene was chosen as the representative reducing agent in the exhaust. In the STD mode, the feedstream composition is the standard simulated exhaust composition listed in Table 1, while in the SHA mode the ethylene concentration in the synthetic exhaust feedstream increased to 500 ppm due to steady addition of ethylene. In the CHA mode, the feedstream composition of ethylene was cycled between 150 ppm (standard composition) and 850 ppm ethylene in He. In other words, normal synthetic exhaust was fed to the reactor for 20 seconds and then a mixture of 850 ppm ethylene in helium was fed to the reactor for 20 seconds. This practice was repeated throughout the test. That is, a complete cycle of the CHA mode consists of a HC half-cycle containing only ethylene and an exhaust half-cycle containing the standard composition of 150 ppm NO, 150 ppm ethylene and 13% oxygen in He. Argon was added to the feedstream during the exhaust half-cycle as a reference gas.

The cycling scheme for the HC addition during the CHA mode introduces the same amount of HC into the reactor as does the SHA mode. Details of experimental conditions are included in Table 1.

### Enhancement of Lean-NOₓ Reduction Activity by Cyclic Operation Mode

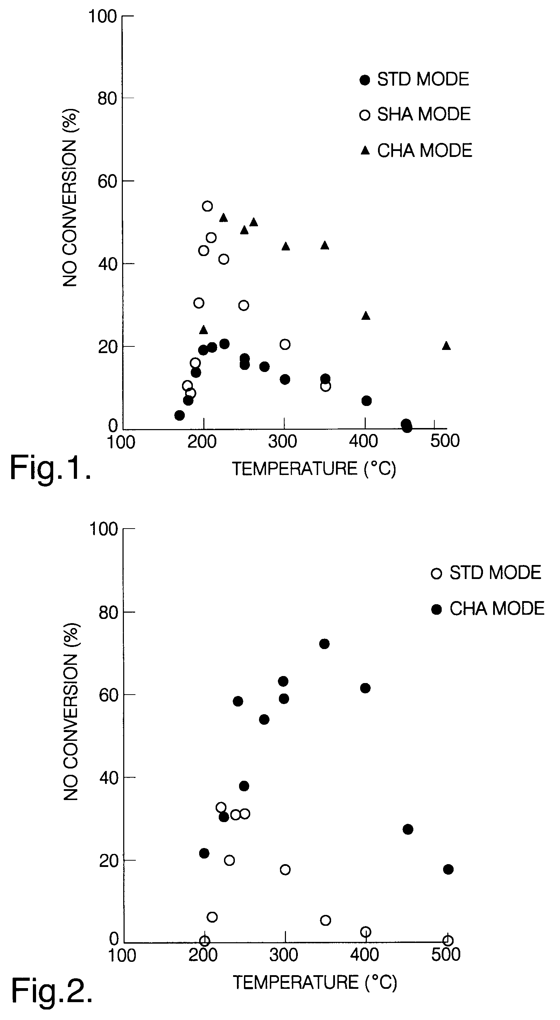

The activity of both the TW and TWP catalysts for NO conversion was measured for different modes of reactor operating conditions. The results for the TW catalyst are summarized in Figure 1 and the results for the TWP catalyst in Figure 2.

Referring to Figure 1, it is seen that a standard three-way catalyst when used in the exhaust of a lean operating engine (STD mode) has a poor NO conversion. The maximum conversion is about 20% over a very narrow temperature range around 200°C. When the TW catalyst was operating in the SHA mode, the maximum NO conversion increased to about 55% but only over a very narrow temperature range around 200°C. Obviously, the temperature of the exhaust from a lean burn operating engine spans a much broader range. The best overall performance of the TW catalyst was in the CHA mode.

Referring to Figure 2, it is seen that the performance of the TWP catalyst in the STD mode is comparable to that of the TW catalyst. However, when the TWP catalyst was operated in the CHA mode, the NO conversion was markedly superior to the TW in any of the three operating modes.

It is remarkable (Figure 1) that the CHA mode greatly enhances the NO conversion activity of the TW catalyst over the entire temperature range above the reaction lightoff temperature (i.e., T > 200°C), leading to a much wider temperature window for the TW catalyst compared to the STD and SHA modes. A similar kinetic behavior was observed for the TWP catalyst (Figure 2). The activity enhancement by the CHA mode compared to the SHA mode is particularly significant in the temperature range between 300°C and 400°C for the TWP catalyst.

### Optimum Frequency of Cyclic Operation

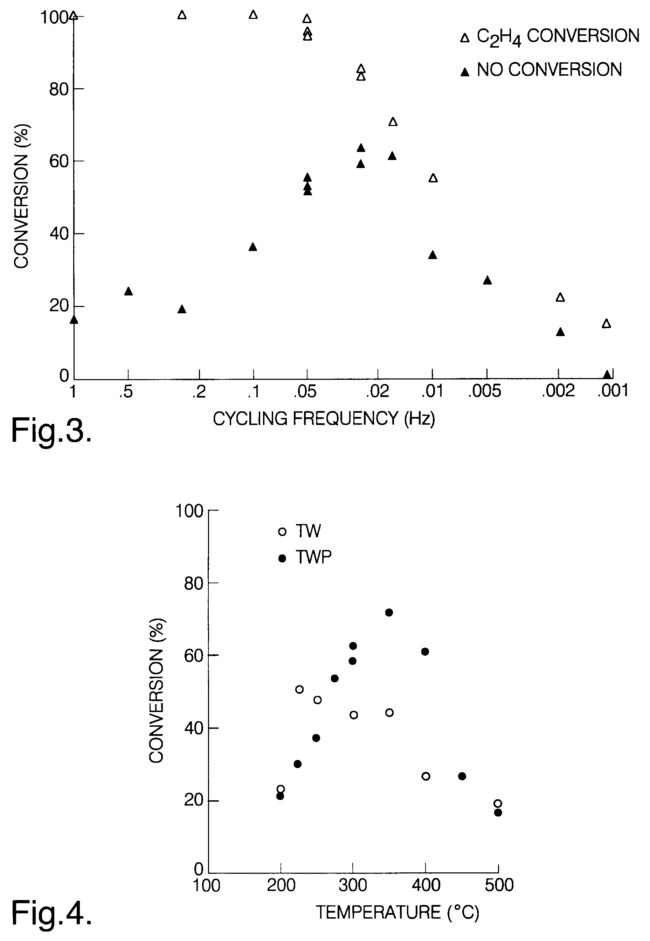

The frequency response of the TWP catalyst's activity is shown in Figure 3 in terms of the ethylene (△) and NO (▲) conversion efficiencies. The conversion of ethylene decreases monotonically with the decreasing cycling frequency, while the NO conversion profile exhibits an optimum cycling frequency at around 0.025 Hz (20 seconds exhaust gas, 20 seconds ethylene in helium). The enhanced activity of the TWP catalyst at the optimum cycling frequency is attributed to the strong chromatographic separation effect of the TWP catalyst on NO.

### Comparison of TW and TWP Catalyst .

Presented in Figure 4 is the direct comparison (from Figures 1 and 2) of the NO conversion efficiency of the TW and TWP catalysts under the CHA mode at the optimum cycling frequency of 0.025 Hz. The TWP catalyst performance is better than the TW catalyst over the entire temperature range except the low temperature regime below 250°C. The rate enhancement of the TWP catalyst between 300°C and 400°C is particularly significant. The TWP catalyst performance is also better than the Pt exchanged ZSM-5 zeolite catalyst over a broad temperature range.

### Strong Chromatographic Separation Effect for NO on TWP Catalyst

Mass spectrometry data on reactor exhaust permits a direct comparison of the transient responses of NO concentration in the gas phase over the two catalysts (TW and TWP) under the CHA mode to demonstrate the strong chromatographic separation effect of the TWP catalyst. In the case of the TW catalyst, most of NO introduced during the exhaust half-cycle elutes during the same exhaust half-cycle. In the case of the TWP catalyst, however, high concentration of NO in the gas phase starts to appear at the beginning of the HC half-cycle, and the gas-phase NO concentration is very low during the exhaust half-cycle even though NO was introduced during the exhaust half-cycle. This demonstrates that, for the TWP catalyst, a large amount of NO introduced during the exhaust half-cycle is stored in the catalyst, which is to be released during the subsequent HC half-cycle. This results in a separation of NO from the exhaust gas mixture during the exhaust half-cycle and the reduction of the stored NO during the subsequent HC half-cycle.

### Formation of Nitrous Oxide Intermediate

Considering that N₂O is a major undesirable byproduct of lean-NOₓ catalysis over noble metal-based catalysts, the effect of both the reactor operating mode and the catalyst formulation on the selectivity of N₂O formation was examined. Results are shown in Table 3 in terms of the N₂O/N₂ ratio in the product stream.

**TABLE 3**

| Effect of Catalyst Formulation/Reactor Operating Mode on N₂O Formation (T = 300°C) | |
|---|---|
| Catalyst Formulation/Reactor Operating Mode | N₂O/N₂ Ratio in the Product |
| TW/SHA | 13.9% |
| TW/CHA (f = 0.05) | 6.7 |
| TWP/CHA (f = 0.05) | 4.8 |

The TW catalyst under the SHA mode yielded the N₂O/N₂ ratio of 13.9%, whereas this ratio decreases to 6.7% under the CHA mode over the same catalyst. This indicates that the CHA mode reduces the amount of N₂O formation compared with the SHA mode. It was discovered that the stored NO during the exhaust half-cycle in the CHA mode does not produce N₂O during its decomposition in the subsequent HC half-cycle.

The TWP catalyst under the SHA mode yielded about the same N₂O/N₂ ratio as the TW catalyst. However, the TWP catalyst under the CHA mode decreased this ratio to 4.8% which is much smaller than that for the TW catalyst. This demonstrates that the TWP catalyst under the CHA mode enhances the lean-NOₓ reduction activity of the TW catalyst, but also reduces the amount of N₂O formation. Thus, the TWP catalyst in combination with the CHA operating mode provides a new approach toward developing an efficient catalytic converter for the lean-NOₓ control. In addition, it was also discovered that the stored NO during the exhaust half-cycle in the CHA mode does not produce N₂O during its decomposition in the subsequent HC half-cycle.

Thus, the invention has two aspects. It provides a new catalyst particularly for the reduction of NOₓ in the exhaust of a fuel-lean operating hydrocarbon-fueled engine. The engine may be a diesel engine or a lean operating gasoline-fueled engine. By lean operation, it is generally meant that the air-to-fuel ratio exceeds 17, especially for the gasoline and diesel fuels now in common use.

The catalyst comprises particles of a mixture of an alkali metal or alkaline earth metal ion exchanged high silica, ZSM-5 type zeolite. While it is considered that any of the common alkali metals and alkaline earth metal ions may be exchanged with the zeolite, sodium ion exchange is preferred. In order to obtain durability in the catalyst, it is preferred that the silica-to-alumina content of the zeolite be of the order of 50 or higher, more preferably at least 200, in order to resist degradation by the water content of the hot exhaust. The exchanged ZSM-5 zeolite is used in an intimate mixture with a typical three-way catalyst as now widely used with gasoline engines in which they are operated at about stoichiometric air-to-fuel ratio. Such three-way catalysts contain platinum and rhodium or platinum, palladium and rhodium supported on a suitable gamma alumina support. The alumina also typically contains cerium or may contain other promoters and stabilizers such as barium, calcium, gadolinium, lanthanum, sodium, potassium and/or zirconium. Cerium is preferred. Thus, a suitable three-way catalyst for use in the present invention is one that contains small amounts of platinum and rhodium supported on a cerium-containing alumina support.

Even relatively small proportions of the zeolite in mixture with the three-way catalyst will improve the NO conversion of the TW catalyst. However, it is preferred that the complementary amounts of each of the ZSM-5 zeolite and the TW catalyst each be in the range of 40% to 60% by weight.

In accordance with the process aspect of the invention, the parameters can be adjusted by those skilled in the art to obtain the best benefit of either a conventional three-way catalyst or the zeolite-promoted three-way catalyst of this invention in the reduction of nitrogen oxides to nitrogen without concurrent formation of nitrous oxide. Where a wide temperature range of success in the process is preferred, then the subject zeolite-promoted three-way catalyst will be employed. Typically, lean-operating hydrocarbon-fueled engines have exhausts in the range of 200°C to about 500°C. As demonstrated, the zeolite-promoted three-way catalyst is effective in this temperature range.

In accordance with the method aspect of this invention, it is preferred to use two parallel catalyst beds. The exhaust stream is first passed through one bed for a period of seconds and then through the other bed. While one bed is receiving the exhaust flow, the other bed is treated with a small amount of a hydrocarbon. The hydrocarbon may, for example, be the same hydrocarbon that is used to fuel the engine. The exhaust stream will have a fairly consistent nominal hydrocarbon content, and it is preferred that the amount or mass of the hydrocarbon injection into the alternate catalyst bed be in the amount of three to six times, for example, the hydrocarbon content of the exhaust. This hydrocarbon injection provides a temporary hydrocarbon-rich environment for the catalyst bed, which permits it to more fully convert the nitrogen oxides that the bed is storing or that are passing through the bed.

In general, it is preferred that the period of exhaust gas flow through a catalyst bed and the period of hydrocarbon injection into the bed be substantially the same. The lengths of these periods which in the above examples were about 20 seconds each can be determined depending upon the actual operating engine and the catalyst system.

In a less preferred environment, a single catalyst bed can be used and hydrocarbon is simply injected from time to time into the exhaust stream. However, as seen from the above-illustrated embodiments, this practice is not as effective as cyclical operation using two parallel beds.

While the invention has been described in terms of a few specific embodiments, it is apparent that other embodiments could readily be adapted by those skilled in the art. Accordingly, the scope of this invention is intended to be limited only by the following claims.

## Claims

1. A catalyst for promoting the reduction of NOₓ in the exhaust of a fuel lean operating, hydrocarbon fueled engine, said catalyst comprising particles of a mixture of an alkali metal or alkaline earth metal ion exchanged ZSM-5 zeolite having a silica-to-alumina ratio of at least 50 and an alumina supported, platinum and rhodium-comprising three-way catalyst.

2. A catalyst as recited in claim 1 in which said zeolite is characterized by a silica to alumina ratio of at least 200.

3. A catalyst as recited in claim 1 in which said three-way catalyst contains one or more elements selected from the group consisting of barium, calcium, cerium, gadolinium, lanthanum, sodium, potassium and zirconium.

4. A catalyst as recited in claim 3 in which said element is cerium.

5. A catalyst as recited in claim 1 in which said zeolite is a sodium ion exchanged zeolite.

6. A method of reducing the NO_{X} content of the exhaust stream from a lean operating, hydrocarbon fueled engine, said exhaust stream having a content of unburned hydrocarbon, said method comprising cyclically and alternately directing the passage of said stream between and through two catalyst beds each containing an alumina-supported, platinum and rhodium-comprising three-way catalyst while cyclically and alternately injecting a hydrocarbon into said beds.

7. A method as recited in claim 6 in which the mass of each said hydrocarbon injection is in the range of three to six times the mass of said hydrocarbon in said exhaust stream.

8. A method as recited in claim 6 in which the hydrocarbon injected into the catalyst beds is a hydrocarbon used as fuel in said engine.

9. A method as recited on claim 6 in which the period of the exhaust stream passage and the period of hydrocarbon injection are predetermined to maximize NO_{X} reduction.

10. A method as recited in claim 9 in which the periods of exhaust flow and hydrocarbon injection are substantially equal and are in the range of 10 to 60 seconds.
